# EUROPÄISCHE PATENTSCHRIFT

(11) **EP 1 375 731 B1**
(45) Veröffentlichungstag und Bekanntmachung des Hinweises auf die Patenterteilung: **27.02.2008**
(21) Anmeldenummer: 03010258.6
(22) Anmeldetag: 07.05.2003
(51) Int. Cl.: D06N 7/00, C09D 123/02, C09D 123/14

(54) **Verfahren zur Noppen- und Filamenteinbindung von Teppichrohware**
Process for back coating a carpet
Procede d'enduction de la face envers d'un tapis

(30) Priorität: 26.06.2002 DE 10228622
(43) Veröffentlichungstag der Anmeldung: 02.01.2004
(73) Patentinhaber: Evonik Degussa GmbH, 40474 Düsseldorf (DE)
(72) Erfinder: Vey, Marlies, 45772 Marl (DE); Wey, Hans Günther, Dr., 45470 Mülheim (DE)

(56) Entgegenhaltungen:
- EP-A- 0 518 014
- EP-A- 0 592 683
- WO-A-93/12285
- DE-A- 2 610 141
- DE-A- 2 853 385
- GB-A- 1 329 915
- US-A- 3 928 281
- US-A- 3 982 051

## Beschreibung

Die Erfindung betrifft ein Verfahren zur Noppen- und Filamenteinbindung von Teppichrohwaren mit Hot-Melts auf Basis amorpher Poly-α-olefine.

Bislang werden Polfäden und Polschlingen der Teppichrohware üblicherweise mit carboxyliertem SBR-Latex, gefüllt mit unterschiedlichen Mengen an Kreide, verankert. Bei diesem Verfahren muss nach dem Auftragen das Wasser aus dem Latex verdampft werden. Dies geschieht unter erheblichem Energie- und Zeiteinsatz in bis zu 40 m langen Trocknungskanälen. In einem zusätzlichen Verfahrensschritt muss dann eine weitere Schicht auf den Rücken des Teppichs aufgetragen werden. Dies kann beispielsweise eine bituminöse Masse, ein Polyurethanschaum oder, wie in der EP-A-0 309 674 beschrieben, eine Schwerbeschichtungsmasse sein. Teppiche dieser Art, bei denen die Noppen- und Filamenteinbindung mittels der obengenannten Latices erfolgt, bereiten jedoch beim Recycling der Altteppiche Schwierigkeiten.

Aus der DE-A-26 10 141 sind Tufting-Teppiche bekannt, bei denen das Trägermaterial bereits vor dem Einsatz eine unterseitige Beschichtung aus einem ataktischen Poly-α-olefin erhält. Nach dem Einstechen des Polgarns erfolgt eine Fixierung durch Erhitzen. Wegen des Widerstands der Beschichtung ist das Einstechen des Polgarns jedoch schwierig, darüber hinaus besteht die Gefahr, dass die Nadel verklebt. Zudem ist auf diese Weise nur eine Noppeneinbindung, nicht aber eine Einzelfilamenteinbindung möglich. Aus diesen Gründen wurde das Verfahren bis jetzt nicht realisiert.

Darüber hinaus ist aus der DE-A-19 59 141 ein Teppich bekannt, der eine Rückenbeschichtung aus einer Masse enthält, die aus Ethylenmischpolymerisat, Wachs und erheblichen Mengen einer Harzmischung besteht. Das dort in erster Linie verwendete Ethylen-Vinylacetat-Copolymere führt jedoch zu erheblichen Geruchsproblemen während des Gebrauchs. Die verwendeten Harze sind teuer; zudem weist die Masse einen sehr niedrigen Erweichungspunkt und damit verbunden eine sehr niedrige Wärmestandfestigkeit auf. Gleiches gilt auch für die in der GB 1 155 786 beschriebene Zusammensetzung.

Dreidimensional verformbare, recyclingfähige Bodenteppiche mit einer Rückenbeschichtung, die ein Poly-α-olefin enthält, sind aus der EP-A-0 518 014 bekannt. Die Rückenbeschichtung enthält jedoch erhebliche Mengen an isotaktischem Polypropylen sowie an Füllstoff und ist daher als Schmelze hochviskos. Obwohl hiervon eine ausreichend dicke Schicht aufgetragen wird, um den Bodenteppich bleibend dreidimensional verformen zu können, hat es sich gezeigt, dass eine Noppen- und Filamenteinbindung mit einer derartigen Beschichtungsmasse nicht gelingt.

Aus der EP-A-0592683 ist ein Verfahren zur Noppen- und Filamenteinbindung einer Teppichrohware bekannt, wobei zwei Zusammensetzungen verwendet werden, die vollkommen amorphe Olefinpolymere enthalten. Es hat sich jedoch herausgestellt, dass hier die Noppen und die Einzelfilamente nicht fest genug eingebunden werden.

Aus der US 3,928,281 ist ein Verfahren zur Beschichtung eines Teppichrückens mit einem Schmelzkleber bekannt, der neben einem ataktischen Polypropylen ein isocyanatgruppenhaltiges Urethanpräpolymer enthält. Durch die Anwesenheit des Polyurethans ist ein sortenreines Recycling jedoch nicht möglich.

Somit bestand die Aufgabe, eine Methode zur Verfügung zu stellen, um eine Noppen- und Filamenteinbindung von Teppichrohwaren auf einfache und wirksame Weise zu bewirken und hierbei die Nachteile zu vermeiden, die beispielsweise mit der Verwendung von Latex verbunden sind.

Diese Aufgabe wurde mit einem Verfahren gelöst, bei dem eine Schmelze folgender Zusammensetzung:
a) 50 bis 100 Gew.-% weitgehend amorphes Poly-α-olefin mit einer Schmelzenthalpie von mindestens 2 J/g und maximal 100 J/g,
b) 0 bis 5 Gew.-% kristallines Polyolefin,
c) 0 bis 40 Gew.-% Harz,
d) 0 bis 35 Gew.-% Füllstoffe oder Pigmente,
e) 0 bis 10 Gew.-% Flammschutzmittel (ausgenommen Magnesiumhydroxid und Aluminiumhydroxid) sowie
f) 0 bis 15 Gew.-% Wachs,
wobei die Schmelzviskosität bei 190 °C, gemessen in einem Rotationsviskosimeter gemäß DIN 53019, im Bereich von 200 mPas bis 20 000 mPas, bevorzugt im Bereich von 400 mPas bis 10 000 mPas, besonders bevorzugt im Bereich von 500 bis 8 000 mPas und insbesondere bevorzugt im Bereich von 600 bis 6 000 mPas liegt,
flächig so auf die Rückseite der Teppichrohware aufgetragen wird, dass ein Auftragsgewicht von 20 bis 1 500 g/m², bevorzugt von 50 bis 1 000 g/m² und besonders bevorzugt von 60 bis 800 g/m² resultiert.

Als weitgehend amorphes Poly-α-olefin eignet sich insbesondere eines der Monomerenzusammensetzung
- 0 bis 100 Gew.-% und bevorzugt 0 bis 80 Gew.-% eines Poly-α-olefins mit 4 bis 10 Kohlenstoffatomen,
- 0 bis 100 Gew.-% und bevorzugt 20 bis 100 Gew.-% Propen
- 0 bis 20 Gew.-% Ethen,
beispielsweise ataktisches Polypropylen (APP), ataktisches Poly-1-buten, Propen-Ethen-Copolymere, Propen-1-Buten-Copolymere, 1-Buten-Ethen-Copolymere oder Propen-1-Buten-Ethen-Terpolymere. Selbstverständlich können auch Mischungen verschiedener Poly-αolefine eingesetzt werden.

In einer bevorzugten Ausführungsform setzt man ein weitgehend amorphes Poly-α-olefin mit einem Erweichungspunkt (Ring- und Kugelmethode gemäß DIN EN 1427) zwischen 70 und 165 °C, einer Schmelzviskosität (nach DIN 53019) bei 190 °C zwischen 2 000 und 200 000 mPas, einer Dichte kleiner als 0,90 g/cm³ und einer Nadelpenetration 100/25/5 gemäß DIN EN 1426 zwischen 3 und 50 0,1 mm ein. Entsprechende Polymere können durch gezielte Polymerisation an klassischen Ziegler-Katalysatoren bzw. deren Weiterentwicklungen hergestellt werden, wie es beispielsweise in der DE-PS 23 06 667 oder der DE-PS 29 30 108 beschrieben ist.

Der kristalline Anteil des weitgehend amorphen Poly-α-olefins kann beispielsweise durch Bestimmen der Schmelzenthalpie mittels der DSC-Methode abgeschätzt werden. Hierbei wird eine abgewogene Probe zunächst mit einer Aufheizgeschwindigkeit von 10 °C/min von -100 °C bis +210 °C aufgeheizt, dann mit einer Geschwindigkeit von 10 °C/min wieder auf -100 °C abgekühlt. Nachdem auf diese Weise die thermische Vorgeschichte der Probe eliminiert wurde, wird wiederum mit einer Geschwindigkeit von 10 °C/min auf 210 °C erhitzt und hierbei durch Integration des Schmelzpeaks, der auf den Kristallitschmelzpunkt Tₘ zurückzuführen ist, die Schmelzenthalpie der Probe bestimmt. Im Rahmen der Erfindung beträgt die Schmelzenthalpie des weitgehend amorphen Poly-α-olefins maximal 100 J/g, bevorzugt maximal 60 J/g und besonders bevorzugt maximal 40 J/g. Die Untergrenze der Schmelzenthalpie liegt bei 2 J/g und bevorzugt bei 4 J/g.

Bevorzugt enthält die Beschichtungsmasse 60 bis 98 Gew.-% und besonders bevorzugt 70 bis 96 Gew.-% des weitgehend amorphen Poly-α-olefins.

Das kristalline Polyolefin der Komponente b) ist in der Regel ein isotaktisches Polypropylen oder ein isotaktisches Poly-1-buten. Hierbei können sowohl Homo- als auch Copolymere eingesetzt werden, beispielsweise Propen-1-Buten-Copolymere, Ethen-Propen-Random-Copolymere oder Ethen-Propen-Blockcopolymere. Falls ein derartiges Polyolefin eingesetzt wird, liegt es in der Beschichtungsmasse bevorzugt zu mindestens etwa 0,1 Gew.-% vor.

Das Harz der Komponente c) ist beispielsweise ein natürliches oder synthetisches Terpenharz, ein modifiziertes Terpenharz, ein Kolophoniumharz, ein Cumaron-Inden-Harz, ein aliphatisches, aliphatisch-aromatisches oder aromatisch modifiziertes Kohlenwasserstoffharz, ein Flüssigharz, ein hydriertes cyclisches Kohlenwasserstoffharz oder ein Esterharz wie beispielsweise ein vollständig oder teilweise hydriertes Kolophoniumglycerinesterharz oder ein hydrierter Pentaerythritester eines Kolophoniumharzes. Es kann aber auch jedes andere Harz eingesetzt werden, das mit Poly-α-olefinen verträglich bzw. teilverträglich ist.

Die Beschichtungsmasse enthält bevorzugt maximal 30 Gew.-% und besonders bevorzugt maximal 25 Gew.-% Harz, während Mindestmengen von etwa 0,1 Gew.-% bevorzugt, von 2 Gew.-% besonders bevorzugt und von 5 Gew.-% insbesondere bevorzugt sind.

Die Füllstoffe oder Pigmente der Komponente d) sind beispielsweise Ruß, Calciumcarbonat, Bariumsulfat, Aluminiumoxid, Aluminiumhydroxid bzw. Magnesiumhydroxid (die gleichzeitig auch als Flammschutzmittel wirken können), Graphit, anorganische oder organische Farbpigmente bzw. Weißpigmente. Bevorzugt werden hiervon maximal 20 Gew.-% und besonders bevorzugt maximal 15 Gew.-% eingesetzt, während Mindestmengen von etwa 0,05 Gew.-% bevorzugt, von 0,3 Gew.-% besonders bevorzugt und von 1 Gew.-% insbesondere bevorzugt sind.

Als Flammschutzmittel der Komponente d) kann jedes für Polyolefinformmassen gebräuchliche Flammschutzmittel verwendet werden. Insbesondere kommen bromierte oder phosphorhaltige Flammschutzmittel in Frage. Die Beschichtungsmasse enthält bevorzugt maximal 6 Gew.-% Flammschutzmittel, während eine Untergrenze von etwa 0,1 Gew.-% bevorzugt ist.

Als Wachs kann jedes gebräuchliche Polyethylenwachs oder Polypropylenwachs eingesetzt werden, beispielsweise Fischer-Tropsch-Wachse oder Polyethylenparaffine, wie sie entweder durch Polymerisation von Ethylen oder durch Abbau höhermolekularer Polyethylene gewonnen werden, Tafelparaffine oder mikrokristalline Erdölparaffine. Die Beschichtungsmasse enthält bevorzugt maximal 10 Gew.-% und besonders bevorzugt maximal 7 Gew.-% Wachs, während eine Untergrenze von etwa 0,1 Gew.-% bevorzugt ist.

Falls spezielle anwendungstechnische Erfordernisse erfüllt werden sollen, können noch insgesamt maximal 20 Gew.-% und bevorzugt insgesamt maximal 15 Gew.-% anderer Zusatzstoffe wie z. B. Ethylen-Vinylacetat-Copolymer, Polyisobuten, Kautschuk (EPM, EPDM, SEBS), Mineralöl, Stabilisatoren und/oder Antistatika enthalten sein.

Der Erweichungspunkt der Beschichtungsmasse, gemessen mit der Ring- und Kugelmethode, beträgt bevorzugt mindestens 80 °C, besonders bevorzugt mindestens 85 °C und insbesondere bevorzugt mindestens 90 °C, während er bevorzugt maximal 165 °C, besonders bevorzugt maximal 150 °C und insbesondere bevorzugt maximal 140 °C beträgt.

Die Beschichtungsmasse kann auf die Rückseite der Teppichrohware (etwa Tufting, Nadelfilz oder Velour) beispielsweise mittels Rakelauftrag, Sprühauftrag, Rollenauftrag oder mit einer Breitschlitzdüse aufgebracht werden. Die Auftragstemperatur liegt über der Erweichungstemperatur der Beschichtungsmasse und in der Regel im Bereich von 100 bis 190 °C; sie richtet sich selbstverständlich auch nach dem Material des zu beschichtenden Teppichs. Bei einem Teppich aus Polypropylenfaser oder Naturfaser wird besonders vorteilhaft mit einer Auftragstemperatur von 150 bis 180 °C gearbeitet, während höherschmelzendes Teppichmaterial, z. B. PA 66, im Prinzip auch Auftragstemperaturen von mehr als 190 °C gestattet.

Vor dem Auftrag der Beschichtungsmasse kann der Teppich vorgeheizt werden, beispielsweise mittels IR-Strahler. In den meisten Fällen ist nach dem Auftrag der Beschichtungsmasse ein Beheizen mit einem weiteren IR-Strahler sinnvoll, damit die heiße Beschichtungsmasse besser in die Schlingen einpenetriert.

Das erforderliche Beschichtungsgewicht ist insbesondere von der Dicke der Noppen abhängig, wobei dicke Noppen auch einen dickeren Auftrag benötigen.

Falls gewünscht, können in einem Arbeitsschritt gleichzeitig Polfäden und Polschlingen eingebunden, als auch ein Vlies, ein Filz oder ein Schaum zulaminiert werden, wobei letztere aus einer Vielzahl unterschiedlicher Materialien bestehen können. Falls gewünscht, kann mit dem gleichen Auftragssystem auch eine Schwerbeschichtungsmasse im Anschluss an die Einbindung der Polfäden und -schlingen appliziert werden.

Die schnelle Verfestigung der Beschichtungsmasse beim Erkalten erlaubt ein sofortiges Aufrollen nach der Beschichtung der Teppichrohware.

Durch die ausschließliche Verwendung physikalisch härtender Rohstoffe in der erfindungsgemäß verwendeten Beschichtungsmasse wird das Recycling der Teppiche, die beispielsweise aus Polypropylen oder Polyamid bestehen können, deutlich erleichtert. Im Falle von Polypropylen als Teppichmaterial ist ein sortenreines Recycling möglich.

Zusammen mit den Energieeinsparungen im Vergleich mit der Latexbeschichtung kann das erfindungsgemäße Verfahren als ökonomische sowie umwelt- und ressourcenschonende Alternative zu den derzeit etablierten Verfahren angesehen werden.

Die Erfindung wird im Folgenden durch Beispiele näher erläutert.

### 1. Herstellung der Hot-Melts

1.a. In einem ölbeheizten Rührkessel wurden folgende Substanzen zusammen bei 190 °C unter Rühren aufgeschmolzen:
30 Gew.-Teile eines weitgehend amorphen, propenreichen Poly-α-olefins mit einer Schmelzviskosität von 3500 mPas/190 °C (VESTOPLAST® 704; Nadelpenetration bei 25 °C von 24 0,1 mm; Erweichungspunkt 105 °C) sowie
30 Gew.-Teile eines weitgehend amorphen, butenreichen Poly-α-olefins mit einer Schmelzviskosität von 8000 mPas/190 °C (VESTOPLAST® 408; Nadelpenetration bei 25 °C von 4 0,1 mm; Erweichungspunkt 118 °C).

Danach erfolgte die portionierte Zudosierung von 30 Gew.-Teilen eines aliphatischen Kohlenwasserstoffharzes (ESCOREZ^{®} 1102, Viskosität 7000 mPas/150 °C; Erweichungspunkt 100 °C) und
10 Gew.-Teilen eines Polyethenwachses (VESTOWAX^{®} A616).
Die gesamte Mischung wurde unter Rühren 1 Stunde bei 180 °C homogenisiert.
Man erhielt eine Masse mit folgenden Eigenschaften:

| | |
|---|---|
| Erweichungspunkt, Ring und Kugel: | 118 °C |
| Nadelpenetration 100/25/5: | 8-9 0,1 mm |
| Schmelzviskosität bei 190 °C | 1660 mPas. |

1.b. Wie unter 1.a. wurden folgende Substanzen gemischt:
30 Gew.-Teile VESTOPLAST^{®} 704,
26 Gew.-Teile VESTOPLAST^{®} 408,
30 Gew.-Teile eines aliphatischen Kohlenwasserstoffharzes (ESCOREZ^{®} 5300; Viskosität 1000 mPas/150 °C; Erweichungspunkt 105 °C),
4 Gew.-Teile eines maleinsäureanhydridmodifizierten Polypropylens (EXXELOR® PO 1015) sowie
10 Gew.-Teile VESTOWAX^{®} A616.

Man erhielt eine Masse mit folgenden Eigenschaften:

| | |
|---|---|
| Erweichungspunkt, Ring und Kugel: | 134 °C |
| Nadelpenetration 100/25/5: | 8-9 0,1 mm |
| Schmelzviskosität bei 190 °C | 2410 mPas. |

### 2. Pol- und Einzelfilamenteinbindung

### Methode A:

Eingesetzt wurde ein Tufting-Teppich aus Polyamid-Fasermaterial mit einem Polypropylen-Trägergewebe mit einem Gesamtgewicht von 600 g/m². Zur Verankerung der Polnoppen im Trägergewebe wurde der Teppichrücken mit dem vorstehend beschriebenen Hot-Melt beschichtet.

Das Vorstrichmaterial wurde durch ein auf 170 °C beheiztes Messerrakel, das gegen eine beheizte Walze arbeitete, auf den Rücken der Teppichbahn aufgebracht. Die Massetemperatur betrug hierbei 170 °C, die Beschichtungsgeschwindigkeit 5 m/min und das Auftragsgewicht 400 g/m².

Vor und nach der Beschichtung passierte der Teppichrücken jeweils ein Infrarot-Feld; er wurde hierbei auf 120 °C vortemperiert. Die Nachheizung sorgte dafür, dass der applizierte Auftrag für kurze Zeit bei 140 °C flüssig gehalten wurde, um das Einpenetrieren des Hot-Melts zu verbessern.

### Methode B:

Es wurde wie bei Methode A vorgegangen, mit folgenden Unterschieden:

Das Vorstrichmaterial wurde durch eine auf 170 °C beheizte Breitschlitzdüse aufgebracht. Die Beschichtungsgeschwindigkeit betrug hierbei 10 m/min und das Auftragsgewicht 340 g/m².

Bei beiden Methoden wurden die hergestellten Teppichmuster in Anlehnung an den Tretradtest System Lisson (EN 1963) geprüft. Darüber hinaus wurde die Noppenausreißfestigkeit bestimmt. Die Ergebnisse dieser Prüfungen sind in der Tabelle 1 wiedergegeben.

**Tabelle 1: Prüfung der Pol- und Einzelfilamenteinbindung unter Verwendung der Hot-Melts gemäß 1.a. und 1.b.**

| Beispiel | 1 | | 2 | |
|---|---|---|---|---|
| Hot-Melt gemäß | 1.a. | | 1.b. | |
| | Methode A | Methode B | Methode A | Methode B |
| Noppenausreißfestigkeit [kg] | 6,0 | 6,1 | 5,9 | 6,1 |
| Prüfung mit Tretrad-Gerät; visuelle Beurteilung nach Anzahl der Trittfrequenzene^{a)} | | | | |
| 750 | ++ | ++ | ++ | ++ |
| 1000 | ++ | ++ | ++ | ++ |
| 1500 | +/++ | ++ | +/++ | ++ |
| 2000 | +/++ | ++ | + | +/++ |

| | | | | |
|---|---|---|---|---|
| ^{a)} Beurteilt wurde eine eventuelle Beeinträchtigung der Oberfläche, in erster Linie das Herausarbeiten von Einzelfilamenten; ++ sehr gut + gut | | | | |

### Methode C:

Es wurde wie bei Methode B vorgegangen, mit folgenden Unterschieden:

Eingesetzt wurde ein Tufting-Teppich aus Polypropylen-Fasermaterial mit einem Polypropylen-Trägergewebe mit einem Gesamtgewicht von 390 g/m².

Die Prüfergebnisse entsprechen denen von Methode B.

### Methode D:

Gegenüber Methode C wurden folgende Änderungen vorgenommen:

Das Auftragsgewicht betrug 400 g/m². Nach Passieren des Nachheizbereichs wurde ein textiler Zweitrücken zulaminiert.

Die Prüfergebnisse entsprechen denen von Methode B.

## Patentansprüche

1. Verfahren zur Noppen- und Filamenteinbindung einer Teppichrohware,
**dadurch gekennzeichnet,**
**dass** eine Beschichtungsmasse, die aus folgenden Komponenten besteht:
a) 50 bis 100 Gew.-% weitgehend amorphes Poly-α-olefinmit einer Schmelzenthalpie von mindestens 2 J/g und maximal 100 J/g,
b) 0 bis 5 Gew.-% kristallines Polyolefin,
c) 0 bis 40 Gew.-% Harz,
d) 0 bis 35 Gew.-% Füllstoffe oder Pigmente,
e) 0 bis 10 Gew.-% Flammschutzmittel (ausgenommen Magnesiumhydroxid und Aluminiumhydroxid) sowie
f) 0 bis 15 Gew.-% Wachs,
als Schmelze flächig so auf die Rückseite der Teppichware aufgetragen wird, dass ein Auftragsgewicht von 20 bis 1 500 g/m² resultiert, wobei die Schmelzviskosität der Beschichtungsmasse bei 190 °C gemessen in einem Rotationsviskosimeter gemäß DiN53019 im Bereich von 200 mPas bis 20 000 mPas liegt.

2. Verfahren gemäß Anspruch 1,
**dadurch gekennzeichnet,**
**dass** das weitgehend amorphe Poly-α-olefin die Monomerenzusammensetzung
- 0 bis 100 Gew.-% eines Poly-α-olefins mit 4 bis 10 Kohlenstoffatomen,
- 0 bis 100 Gew.-% Propen und
- 0 bis 20 Gew.-% Ethen besitzt.

3. Verfahren gemäß Anspruch 1,
**dadurch gekennzeichnet,**
**dass** das weitgehend amorphe Poly-α-olefin die Monomerenzusammensetzung
- 0 bis 80 Gew.-% eines Poly-α-olefins mit 4 bis 10 Kohlenstoffatomen,
- 20 bis 100 Gew.-% Propen und
- 0 bis 20 Gew.-% Ethen besitzt.

4. Verfahren gemäß einem der vorhergehenden Ansprüche,
**dadurch gekennzeichnet,**
**dass** das weitgehend amorphe Poly-α-olefin ausgewählt ist aus der Gruppe ataktisches Polypropylen (APP), ataktisches Poly-1-buten, Propen-Ethen-Copolymere, Propen-1-Buten-Copolymere, 1-Buten-Ethen-Copolymere und Propen-1-Buten-Ethen-Terpolymere.

5. Verfahren gemäß einem der vorhergehenden Ansprüche,
**dadurch gekennzeichnet,**
**dass** das weitgehend amorphe Poly-α-olefin einen Erweichungspunkt zwischen 70 und 165 °C, eine Schmelzviskosität bei 190 °C zwischen 2 000 und 200 000 mPas, eine Dichte kleiner als 0,90 g/cm³ und eine Nadelpenetration zwischen 3 und 50 0,1 mm besitzt.

6. Verfahren gemäß einem der vorhergehenden Ansprüche,
**dadurch gekennzeichnet,**
**dass** die Beschichtungsmasse 60 bis 98 Gew.-% des weitgehend amorphen Poly-α-olefins enthält.

7. Verfahren gemäß einem der vorhergehenden Ansprüche,
**dadurch gekennzeichnet,**
**dass** die Beschichtungsmasse mindestens 0,1 Gew.-% Wachs enthält.

8. Verfahren gemäß einem der vorhergehenden Ansprüche,
**dadurch gekennzeichnet,**
**dass** die Beschichtungsmasse maximal 10 Gew.-% Wachs enthält.

9. Verfahren gemäß einem der vorhergehenden Ansprüche,
**dadurch gekennzeichnet,**
**dass** die Beschichtungsmasse maximal 7 Gew-.% Wachs enthält.

10. Teppich, hergestellt nach dem Verfahren gemäß einem der vorhergehenden Ansprüche.

## Claims

1. Process for tuft and filament binding in unfinished carpet, **characterized in that** a coating composition which consists of the following components:
a) from 50% to 100% by weight of substantially amorphous poly-α-olefin having an enthalpy of fusion of at least 2 J/g and not more than 100 J/g,
b) from 0% to 5% by weight of crystalline polyolefin,
c) from 0% to 40% by weight of resin,
d) from 0% to 35% by weight of fillers or pigments,
e) from 0% to 10% by weight of flame retardant other than magnesium hydroxide and aluminum hydroxide and
f) from 0% to 15% by weight of wax,
is applied as a melt uniformly to the backside of the carpet material so as to obtain a coating weight of from 20 to 1 500 g/m², the melt viscosity of the coating composition at 190°C, measured in a rotary viscometer as per DIN 53019, being in the range from 200 mPas to 20 000 mPas.

2. Process according to Claim 1, **characterized in that** the substantially amorphous poly-α-olefin has the monomer composition
- from 0% to 100% by weight of a poly-α-olefin having 4 to 10 carbon atoms,
- from 0% to 100% by weight of propene, and
- from 0% to 20% by weight of ethene.

3. Process according to Claim 1, **characterized in that** the substantially amorphous poly-α-olefin has the monomer composition
- from 0% to 80% by weight of a poly-α-olefin having 4 to 10 carbon atoms,
- from 20% to 100% by weight of propene, and
- from 0% to 20% by weight of ethene.

4. Process according to any one of the preceding claims, **characterized in that** the substantially amorphous poly-α-olefin is selected from the group consisting of atactic polypropylene (APP), atactic poly-1-butene, propene-ethene copolymers, propene-1-butene copolymers, 1-butene-ethene copolymers and propene-1-butene-ethene terpolymers.

5. Process according to any one of the preceding claims, **characterized in that** the substantially amorphous poly-α-olefin has a softening point between 70 and 165°C, a melt viscosity between 2 000 and 200 000 mPas at 190°C, a density of less than 0.90 g/cm³ and a needle penetration between 3 and 50 0.1 mm.

6. Process according to any one of the preceding claims, **characterized in that** the coating composition contains from 60% to 98% by weight of the substantially amorphous poly-α-olefin.

7. Process according to any one of the preceding claims, **characterized in that** the coating composition contains at least 0.1 % by weight of wax.

8. Process according to any one of the preceding claims, **characterized in that** the coating composition contains not more than 10% by weight of wax.

9. Process according to any one of the preceding claims, **characterized in that** the coating composition contains not more than 7% by weight of wax.

10. Carpet produced by the process of any one of the preceding claims.

## Revendications

1. Procédé de liage de tuft et de filament d'un tapis non fini, **caractérisé en ce qu'**une composition de revêtement qui est composée des composants suivants :
a) de 50 % à 100 % en poids d'une poly-α-oléfine essentiellement amorphe présentant une enthalpie de fusion d'au moins 2 J/g et d'au plus 100 J/g,
b) de 0 % à 5 % en poids d'une polyoléfine cristalline,
c) de 0 % à 40 % en poids d'une résine,
d) de 0 % à 35 % en poids de charges ou de pigments,
e) de 0 % à 10 % en poids d'un agent ignifuge (à l'exception de l'hydroxyde de magnésium et de l'hydroxyde d'aluminium), ainsi que
f) de 0 % à 15 % en poids d'une cire,
est appliquée en tant que masse fondue de façon mince sur le revers du tapis de telle sorte qu'il en résulte un poids d'application de 20 à 1 500 g/m², la viscosité à l'état fondu de la composition de revêtement à 190 °C, mesurée dans un viscosimètre rotatif selon la norme DIN53019, étant dans la plage de 200 mPas à 20 000 mPas.

2. Procédé selon la revendication 1, **caractérisé en ce que** la poly-α-oléfine essentiellement amorphe présente la composition de monomères :
- de 0 % à 100 % en poids d'une poly-α-oléfine renfermant de 4 à 10 atomes de carbone,
- de 0 % à 100 % en poids de propène, et
- de 0 % à 20 % en poids d'éthène.

3. Procédé selon la revendication 1, **caractérisé en ce que** la poly-α-oléfine essentiellement amorphe présente la composition de monomères :
- de 0 % à 80 % en poids d'une poly-α-oléfine renfermant de 4 à 10 atomes de carbone,
- de 20 % à 100 % en poids de propène, et
- de 0 % à 20 % en poids d'éthène.

4. Procédé selon l'une quelconque des revendications précédentes, **caractérisé en ce que** la poly-α-oléfine essentiellement amorphe est choisie parmi le groupe constitué d'un polypropylène atactique (APP), d'un poly-1-butène atactique, de copolymères propène/éthène, de copolymères propène/1-butène, de copolymères 1-butène/éthène et de terpolymères propène/1-butène/éthène.

5. Procédé selon l'une quelconque des revendications précédentes, **caractérisé en ce que** la poly-α-oléfine essentiellement amorphe présente un point de ramollissement compris entre 70 et 165 °C, une viscosité à l'état fondu comprise entre 2 000 et 200 000 mPas à 190 °C, une densité inférieure à 0,90 g/cm³ et une pénétration d'aiguille comprise entre 3 et 50 0,1 mm.

6. Procédé selon l'une quelconque des revendications précédentes, **caractérisé en ce que** la composition de revêtement contient de 60 % à 98 % en poids de la poly-α-oléfine essentiellement amorphe.

7. Procédé selon l'une quelconque des revendications précédentes, **caractérisé en ce que** la composition de revêtement contient au moins 0,1 % en poids d'une cire.

8. Procédé selon l'une quelconque des revendications précédentes, **caractérisé en ce que** la composition de revêtement contient au plus 10 % en poids d'une cire.

9. Procédé selon l'une quelconque des revendications précédentes, **caractérisé en ce que** la composition de revêtement contient au plus 7 % en poids d'une cire.

10. Tapis produit conformément au procédé selon l'une quelconque des revendications précédentes.
